Europäisches Patentamt

European Patent Office

Office européen des brevets

(19)

(11) Numéro de publication : **0 530 088 A1**

(12) **DEMANDE DE BREVET EUROPEEN**

(21) Numéro de dépôt : **92402322.9**

(22) Date de dépôt : **21.08.92**

(51) Int. Cl.$^5$ : **G01S 3/786, G06F 15/70**

(30) Priorité : **27.08.91 FR 9110628**

(43) Date de publication de la demande :
**03.03.93 Bulletin 93/09**

(84) Etats contractants désignés :
**DE GB IT NL**

(71) Demandeur : **THOMSON-CSF
51, Esplanade du Général de Gaulle
F-92800 Puteaux (FR)**

(72) Inventeur : **Pineau, Patrick
THOMSON-CSF, SCPI, Cédex 67
F-92045 Paris la Défense (FR)**
Inventeur : **Robert, Philippe
THOMSON-CSF, SCPI, Cédex 67
F-92045 Paris la Défense (FR)**

(74) Mandataire : **Benoit, Monique et al
THOMSON-CSF, SCPI, B.P. 329, 50, rue
Jean-Pierre Timbaud
F-92402 Courbevoie Cédex (FR)**

(54) Procédé de détection et de suivi d'objets en mouvement par analyse de séquences d'images.

(57) Procédé de détection et de suivi d'objets en mouvement par analyse de séquences d'images constitué d'une étape de détection d'objets (1), d'une étape de séparation des objets connexes (2) et d'une étape de prédiction et de suivi temporels de position et de mouvement d'objets (3), la segmentation des images étant réalisée selon trois classes représentant le fond, les objets et les ombres.

Applications : surveillance et analyses de scènes.

FIG.1

EP 0 530 088 A1

La présente invention concerne un procédé de détection et de suivi d'objets en mouvement par analyse de séquences d'images. Elle s'applique notamment aux systèmes d'analyses de scènes ou de reconnaissances de formes pour la surveillance des aéroports ou du trafic routier par exemple et plus généralement peut servir d'entrée pour tous systèmes de haut niveau d'interprétation.

Dans le domaine de la détection et du suivi d'objets en mouvement, la variété et la diversité des techniques actuelles, que ce soit dans le domaine de la détection ou de l'estimation de mouvement n'apportent pas de solution universelle. En effet, la plupart des techniques proposées sont mises en oeuvre dans un but bien précis afin de faire face par exemple à des situations particulières, à des types d'images données ou à des contraintes pré-définies telles que des conditions matérielles ou des temps d'exécution en particulier. Ces techniques ne sont pas en général applicables dans d'autres contextes que ceux pour lesquels elles ont été élaborées. Le type d'application contribue donc au choix des méthodes de traitement à utiliser. De plus, les outils actuels ne fournissent qu'une information partielle relative à l'analyse d'une image. Même en combinant certains de ces outils existants, l'information extraite n'est pas assez riche pour conduire à une analyse suffisante de la scène observée. Une combinaison des résultats de plusieurs traitements n'est pas toujours suffisante dans certains cas. En effet, les scènes d'images réelles possèdent le nombreux cas d'occlusions ou de croisements d'objets divers, de changements d'illumination ou de manque de contrastes que les systèmes actuels peuvent difficilement gérer.

Le but de l'invention est de pallier les inconvénients précités.

A cet effet l'invention a pour objet un procédé de détection et de suivi d'objets en mouvement par analyse des séquences d'images caractérisé en ce qu'il est constitué d'une première étape de détection d'objets, d'une deuxième étape de séparation des objets connexes et d'une troisième étape de prédiction et de suivi temporel de positions et de mouvements des objets.

L'invention a pour principaux avantages qu'elle ne dépend pas des particularités propres à chaque application, qu'elle ne détecte pas seulement les régions en mouvement mais aussi les objets en mouvement et enfin qu'elle permet une détection fine et fiable des objets.

D'autres caractéristiques et avantages de l'invention apparaîtront à l'aide de la description qui suit faite en regard des dessins annexés qui représentent :

La figure 1, un organigramme pour illustrer les étapes du procédé mis en oeuvre par l'invention.

La figure 2, un organigramme pour illustrer l'étape 1 du procédé selon l'invention.

La figure 3a, des courbes de probabilité d'appartenance à des contours.

La figure 3b, des courbes de probabilité de contours identiques.

Les figures 4 à 7 un premier, deuxième, troisième et quatrième arbre de classification des points selon leur appartenance à différents types de contours.

La figure 8, un tableau des potentiels d'énergie associés aux points d'une clique.

La figure 9, un organigramme pour illustrer l'étape 2 du procédé selon l'invention.

La figure 10, un organigramme pour illustrer le déroulement en parallèle de l'estimation de mouvement et du traitement de l'étape 1.

La figure 11, un organigramme général pour illustrer le procédé selon l'invention.

La figure 12a, une illustration d'objets connexes ayant des mouvements différents.

La figure 12b, une illustration d'une mauvaise séparation d'objets connexes suite à une prédiction fausse des champs de mouvement.

La figure 12c, une illustration d'une séparation réussie d'objets connexes, suite à une prédiction correcte des champs de mouvement.

La figure 13, un organigramme détaillé du procédé selon l'invention.

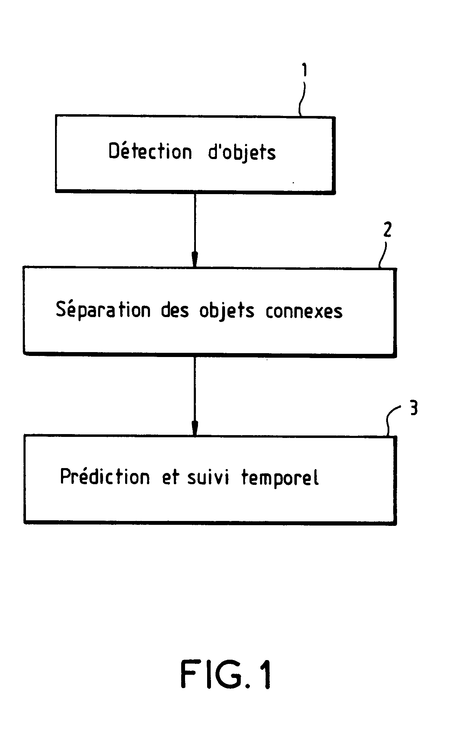

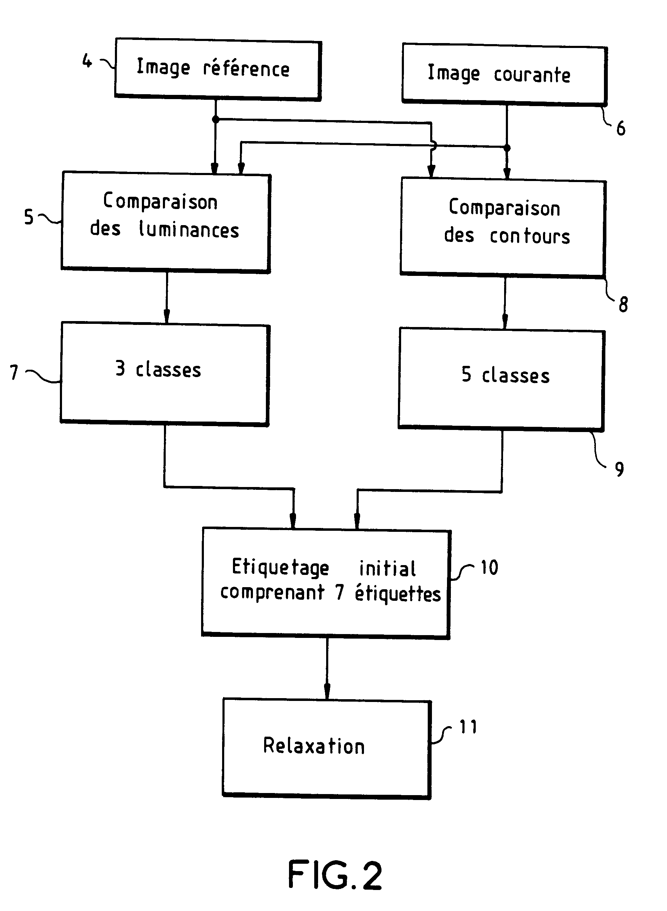

Comme le montre la figure 1, le procédé selon l'invention comporte trois étapes, une étape de détection d'objets 1 qui conduit à l'élaboration de masques d'objets mobiles et à ceux de leurs ombres portées, une étape 2 de séparation d'objets connexes contenus dans un même masque par des critères de mouvement, et enfin une étape 3 de prédiction et de suivi temporel de la position et du mouvement des objets. Le procédé traite notamment des séquences d'images de scènes proches acquises avec une caméra fixe, par exemple des scènes de trafic routier urbain (un exemple d'exécution de l'étape 1 est représenté par les étapes 4 à 11 de l'organigramme de la figure 2). La figure 2 présente un organigramme de l'étape 1. A l'étape 4, la caméra étant fixe, une image de référence représentant le fond de la scène observée excluant tout objet en mouvement est extraite. Une comparaison des luminances a lieu à l'étape 5 entre l'image de référence 4 et l'image courante saisie à l'étape 6, et permet à l'étape 7 une première classification selon trois classes correspondant à trois types de zones, respectivement au fond fixe, aux objets en mouvement et aux régions situées dans l'ombre des objets en mouvement. Ces trois classes sont notées par la suite respectivement fond, objet, et ombre. En parallèle, une comparaison des contours à l'étape 8 entre l'image de référence de l'étape 4 et l'image courante de l'étape 6 permet de classer à l'étape 9 chaque point de l'image suivant cinq autres classes correspondant aux contours du fond fixe, aux contours d'objets en mouvement, aux contours du fond fixe cachés par un objet en mouvement, aux contours du fond fixe situés dans une zone d'ombre et enfin aux points n'appartenant à aucun contour. Ces classes seront notées respectivement contour fond , contour objet, contour caché, contour ombré, et non contour.

A partir de ces deux classifications, un premier étiquetage des points de l'image courante est effectué à l'étape 10. Chaque étiquette porte alors deux informations : une sur les régions et une sur les contours. Suivant les diverses compatibilités, les sept étiquettes possibles sont représentées par les couples suivants :

- (fond, contour fond)
- (fond, non contour)
- (objet, contour objet)
- (objet, contour caché)
- (objet, non contour)
- (ombre, contour ombré)
- (ombre, non contour)

Puis une relaxation déterministe est mise en oeuvre à l'étape 11 avec modélisation par champs de Markov de l'image des étiquettes. Elle permet d'affiner l'étiquetage et fournit les masques des objets en mouvement ainsi que ceux de leur ombre portée qui sont très proches des masques réels.

Comme l'indique l'organigramme de la figure 2, l'utilisation d'une image de référence est nécessaire pour obtenir le masque complet des objets en mouvement par une simple différence seuillée entre cette image et l'image courante. Cette technique présente l'avantage de ne pas nécessiter de post-traitement, contrairement aux autres méthodes à base de différences d'images successives. Elle est très simple d'utilisation et très peu coûteuse en temps de calcul comparée aux méthodes de vraisemblance. De plus, cette méthode, tout en fournissant le masque complet des objets en mouvement dans leur position courante, est capable de prendre en compte les variations d'éclairage grâce à une réactualisation périodique de l'image de référence. Cette dernière qualité est de toute importance dans les cas de scènes extérieures qui sont sujettes aux variations de la lumière naturelle. La construction de l'image de référence et sa réactualisation font appel à des méthodes connues de l'homme de l'art s'inspirant de l'article de K.P. Karmann et A. Von Brandt : "Detection and tracking of moving objects by adaptative background extraction" - Proceedings of the 6th Scandinavian Conference on Image Analysis, Finland, June 19-22 1989.

Une fois l'image de référence obtenue ou réactualisée, la comparaison à l'étape 5 des luminances avec l'image courante permet d'obtenir la segmentation de l'image suivant les trois classes précédemment définies : fond, objet et ombre. Cette segmentation est obtenue par simple différence entre l'image courante et l'image de référence comparée aux seuils délimitant les différentes classes. Cette technique classique est elle aussi connue de l'homme de l'art. Les cinq autres classes nécessaires à l'obtention de l'étiquetage initial sont ensuite obtenues par comparaison des contours à l'étape 8 de l'image de référence et de l'image courante. Cependant avant d'effectuer la comparaison de l'étape 8 une détection des contours doit être effectuée pour définir les frontières entre des régions à caractéristiques de luminance différentes dans une image. La détection des contours qui est aussi bien connue par l'homme de l'art peut avoir lieu dans ce cas en mettant en oeuvre l'opérateur défini dans l'article de R. DERICHE "Using Canny's criteria to derive a recursively implemented optimal edge detector" paru dans la revue "Journal of Computer Vision" 1987 qui est une adaptation du détecteur de Canny au cas des filtres à réponse impulsionnelle infinie. Le détecteur de Canny est développé dans l'article de J. Canny "A Computational approach to edge detection" paru dans le catalogue "Patern Analysis and Machine Intelligence" Volume n°8 de Novembre 1986.

Les détecteurs de contours travaillent à la fois sur l'image courante encore désignée ci-après par image source, et sur l'image de référence. A chaque point de ces images, on dispose alors d'une mesure d'amplitude et de direction de contour. Il s'agit selon l'invention, de comparer les deux cartes de contours obtenues afin de caractériser et de classer les contours de l'image courante. Pour effectuer cette classification, le procédé selon l'invention réalise une comparaison basée sur la mesure de probabilité.

Si A désigne l'événement : "le point est un contour dans la source".

B désigne l'événement : "le point est un contour dans la référence".

et P désigne la mesure de probabilité, alors :

P(A) désigne la probabilité que le point soit un contour dans la source.

P(B) désigne la probabilité que le point soit un contour dans la référence.

Dans ces conditions : $P(A \eta B) = P(A)P(B)$ est la probabilité que le point soit un contour dans la source et un contour dans la référence. Si $P(A \eta B)$ est fort, le point est considéré comme étant sur un contour dans la source et sur un contour dans la référence. Cependant il faut bien considérer que ces contours ne correspondent pas forcément à la même variation de luminance dans la source et dans la référence. En effet, rien ne suppose que les deux points sont sur un même contour dans la source et dans la référence du fait que les amplitudes

EP 0 530 088 A1

et les directions peuvent être différentes. Dans ces conditions il faut considérer que P (A η B) est la probabilité que le point soit sur un contour dans la source et sur un contour dans la référence et que ce soit le même contour, à laquelle il faut ajouter la probabilité que le point soit sur un contour dans la source et sur un contour dans la référence et que les contours dans la source et la référence sont différents.

En désignant par C l'événement "le contour dans la source est le même que celui dans la référence", alors :

$$P(A\eta B) = P(A\eta B\eta C) + P(A\eta B\eta \overline{C})$$

où $\overline{C}$ indique l'événement complémentaire de C et par définition :

$$P(A^{\eta}B^{\eta}C) = P(A^{\eta}B)\ P(C/A^{\eta}B)$$
$$= P(A)\ P(B)\ P(C/(A^{\eta}B))$$

où $P(C/(A\eta B))$ indique la probabilité conditionnelle de l'événement C connaissant l'événement $(A\eta B)$

Les probabilités P(A) ou P(B) pour qu'un point soit sur un contour dans la source ou dans la référence dépendent uniquement de l'amplitude du contour en ce point. L'amplitude est fournie par le détecteur de contour. Cependant, à la suite de l'opérateur de Deriche, on peut procéder à diverses comparaisons avec des seuils pour avoir une carte des contours plus propres et plus précise.

Ces comparaisons peuvent avoir lieu avec des seuils dans la direction des gradients, c'est à dire dans la direction perpendiculaire aux contours. Cela permet de ne sélectionner que les points dont l'amplitude est un maximum local dans la direction du gradient, ces points forment la crête des contours. Ces comparaisons peuvent aussi avoir lieu avec des seuils d'hystérésis des maxima locaux obtenus à la précédente étape. Il est alors normal qu'à amplitude égale, un point de contour restant après les comparaisons avec les seuils ait une probabilité d'être sur un contour plus forte qu'un point de contour éliminé par ces comparaisons.

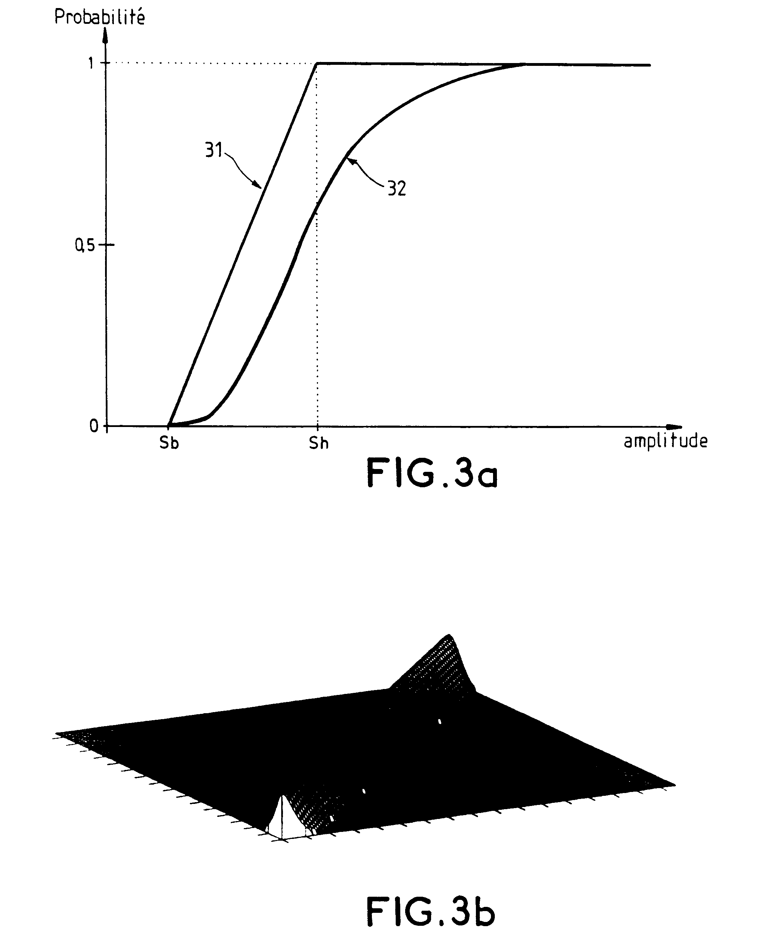

Deux courbes de probabilités sont utilisées selon que le point reste sur un contour après comparaison avec des seuils ou pas, comme le montre la figure 3a.

La courbe 31 indique la probabilité pour qu'un point appartienne à un contour si le point reste sur un contour après comparaison avec des seuils.

La courbe 32 indique la probabilité pour qu'un point appartienne à un contour si le point ne reste pas sur un contour après comparaison avec des seuils.

Les seuils Sb et Sh dépendent du type d'image traitée et donc de la plage des amplitudes des contours obtenus.

$(P(C/(A\eta B))$ est la probabilité que ce point soit sur un contour identique dans la source et dans la référence, sachant que ce point est sur un contour dans la source et sur un contour dans la référence. Cette courbe de probabilité est donc fonction des amplitudes et des directions des contours dans la source et dans la référence, soit fonction de quatre paramètres. Pour calculer cette probabilité, il faut supposer d'abord que les directions des contours dans la source et dans la référence sont égales. La courbe de probabilité ne dépend alors plus que des amplitudes et a l'allure d'une Gaussienne de dimensions 2 centrée sur la diagonale traduisant l'égalité des amplitudes. Cette Gaussienne s'élargit légèrement lorsque les amplitudes croissent car la variance augmente. Cela permet d'accepter une erreur légèrement plus importante lorsque les amplitudes sont fortes.

La figure 3b présente les courbes de probabilité des contours identiques.

La probabilité finale est obtenue en pondérant ces valeurs par un coefficient fonction de la valeur absolue de la différence des directions. Ce terme de pondération w est le suivant :

$$w = \begin{cases} O & si\ |D| > Seuil_{dir} \\ 1 - \dfrac{|D|}{Seuil_{dir}} & sinon \end{cases}$$

où $|D|$ représente la valeur absolue de la différence des directions et $Seui_{dir}$ le seuil définissant l'erreur maximum tolérable sur la différence des directions.

A partir des trois probabilités de base, P(A), P(B) et $P(C/A\eta B)$, les probabilités suivantes sont calculées :
- P(A) : la probabilité que le point soit sur un contour de la source.
- P(B) : la probabilité que le point soit sur un contour dans la référence.
- $P(A\eta B) = P(A)\ P(B)$ : la probabilité que le point soit sur un contour dans la source et sur un contour dans

4

la référence. Cette probabilité est notée Proba-double-cont par la suite.

- P(C/(AηB)) : la probabilité que le point soit sur un contour identique dans la source et dans la référence, sachant que ce point est sur un contour dans la source et sur un contour dans la référence.

- P(A BηC) = P(A) P(B) P(C/AηB)) : la probabilité que le point soit sur un contour dans la source et sur un contour dans la référence et que ce soit le même contour. Cette probabilité est notée Proba-cont-id par la suite.

- [1-P(A)][1-P(B)] : la probabilité que le point soit sur un non contour dans la source et sur un non contour dans la référence. Cette probabilité est notée Proba-non-cont par la suite.

- P(A)-P(AηB) : la probabilité que le point soit sur un contour dans la source et sur un non contour dans la référence. Cette probabilité sera notée Proba-cont-objet par la suite.

- P(B)-P(AηB) : la probabilité que le point soit sur un contour dans la référence et sur un non contour dans la source. Cette probabilité sera notée Proba-cont-caché par la suite.

Dans la suite du procédé, une information utile est recherchée sur la base des contours pour permettre une segmentation correcte de l'image courante. Pour que cette information soit pertinente et la plus riche possible, à chaque point de l'image courante est alors attribuée une des classes suivantes, définissant 4 types de contours différents, contour du fond fixe, contour objet en mouvement, contour caché et non contour.

Dans la classe contour fond fixe : le point est sur le contour dans la source et sur un contour dans la référence et les contours sont identiques. Dans ce cas, la probabilité P(AηB) notée Proba-double-cont est grande, condition nécessaire mais pas suffisante. Ce type de contour est noté contour fond par la suite.

- Dans la classe contour d'objet en mouvement, le point est sur un contour dans la source et soit sur un non contour soit sur un contour différent dans la référence. Dans ce cas, la probabilité P(A)-P(AηB) notée Proba-cont-objet est grande. Ce type de contour est noté contour objet par la suite.

- Dans la classe contour caché : le point est sur un contour dans la référence et est soit sur un non contour soit sur un contour différent dans la source. Dans ce cas, la probabilité P(B)-P(AηB) notée Proba-cont-caché est grande.

- Dans la classe non contour : le point est sur un non contour dans la source et un non contour dans la référence. Dans ce cas la probabilité [1-P(A)][1-P(B)] notée Proba-non-cont est grande.

Ces quatre probabilités qui sont calculées pour chaque point, traduisent l'appartenance aux quatre types de contours. Le point ne pouvant appartenir qu'à une de ces quatre classes de contours, la somme des probabilités vaut 1, d'où :

$$P(A\eta B) \ + \ P(A) - P(A\eta B) \ + \ P(B) - P(A\eta B) \ + \ [1 - P(A)][1 - P(B)] \ = \ 1$$

A cause du bruit et du manque de contraste dans les images, cette classification ne peut cependant pas se limiter à une simple recherche du maximum des probabilités.

En effet, la condition Proba-double-cont maximum par exemple n'est pas suffisante pour classer le point en contour fond. Pour cela, il faut que Proba-cont-id soit lui aussi suffisamment grand. Si ce n'est pas le cas, bien que Proba-double-cont soit maximum, le contour sera plutôt un contour d'objet ou un contour caché.

Inversement, si Proba-cont-objet est maximum, pour classer le point en contour objet, il faut dans ce cas là que Porba-cont-id soit suffisamment faible sinon le contour sera plutôt un contour fond.

Comme l'image de référence est généralement de bonne qualité car moins bruitée que les images sources à cause du filtrage temporel dû à sa réactualisation, les contours issus de cette image peuvent être considérés comme fiables et contribuer à obtenir une meilleure classification. En effet, en supposant que ces contours après comparaison avec des seuils sont justes, lors de la classification, les incompatibilités du type :

- c'est un contour fond alors que c'est un non contour dans la référence
- c'est un contour caché alors que c'est un non contour dans la référence
- c'est un non contour alors que c'est un contour dans la référence

sont évitées.

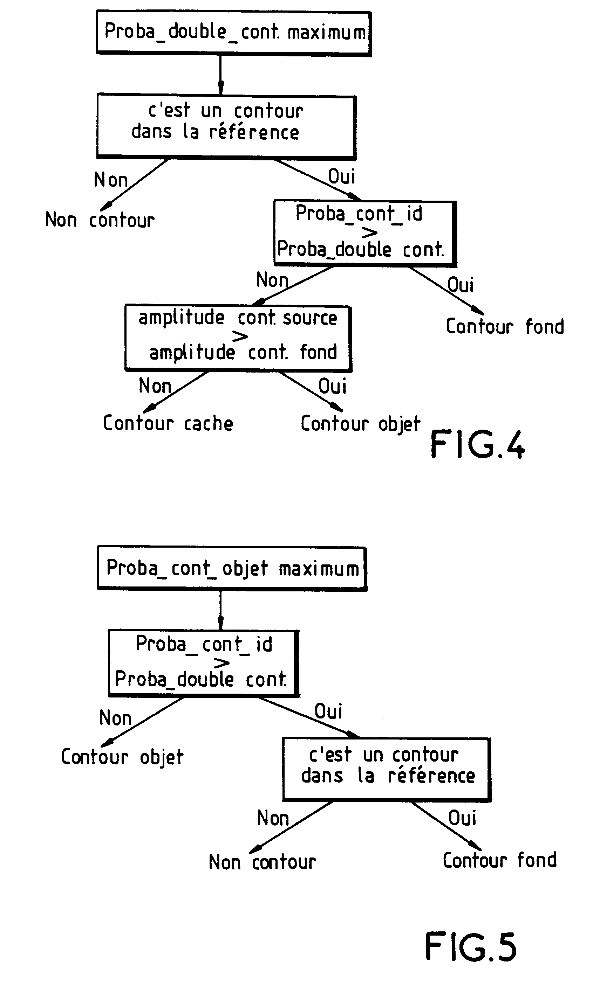

Tenant compte de ces différentes remarques, la classification s'effectue en calculant le maximum entre Proba-double-cont, Proba-cont-objet, Proba-cont-caché, Proba-non-cont, puis suivant ce maximum, la recherche de la classe est conduite suivant les arbres de classification représentés sur les figures 4, 5, 6 et 7.

La figure 4 représente l'arbre de classification lorsque la probabilité P(AηB) notée Proba-double-cont est maximum.

La figure 5 représente l'arbre de classification lorsque la probabilité P(A)-P(AηB) notée Proba-cont-objet est maximum.

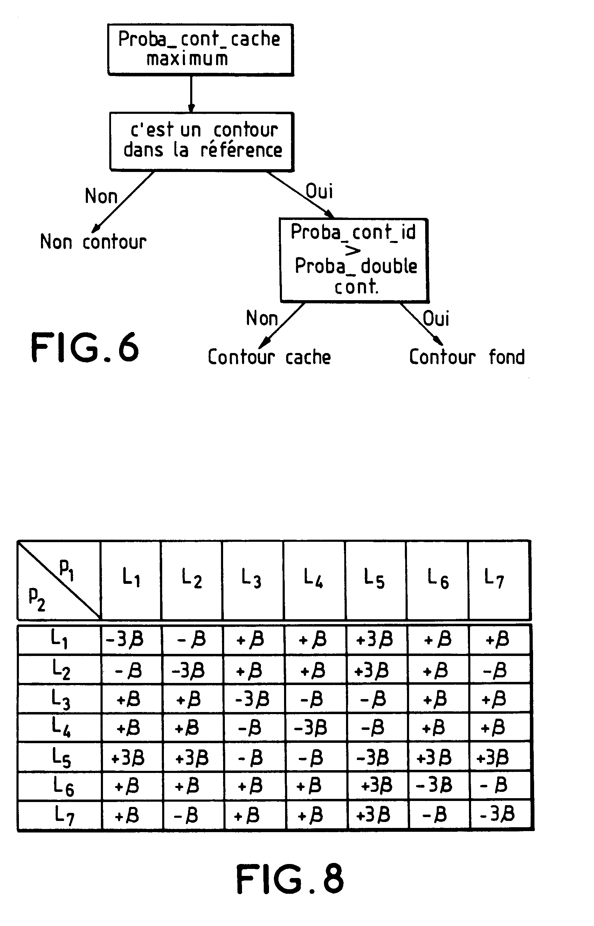

La figure 6 représente l'arbre de classification lorsque la probabilité P(B)-P(AηB) notée Proba-cont-caché est maximum.

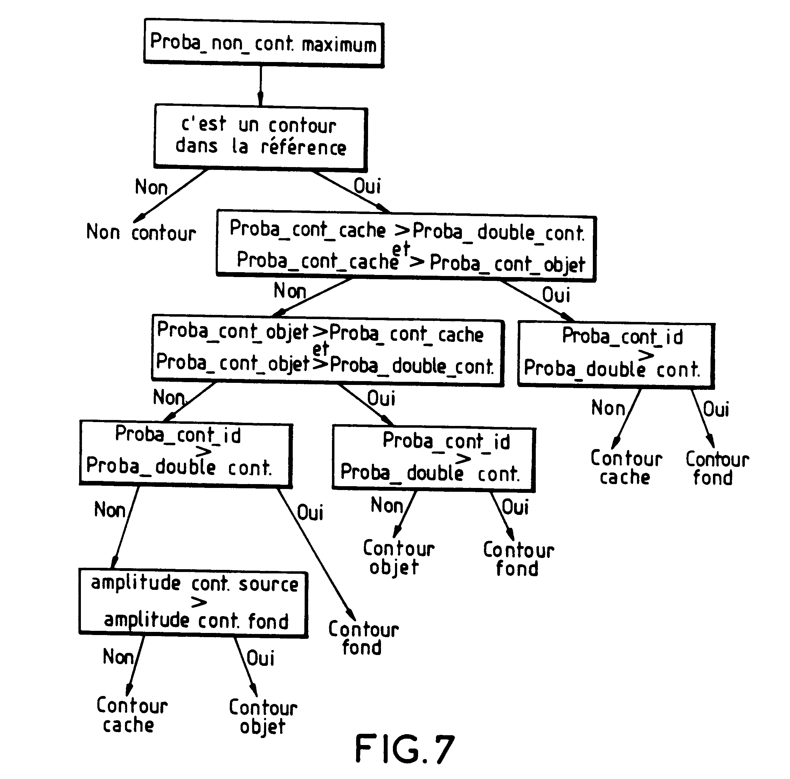

La figure 7 représente l'arbre de classification lorsque la probabilité [1-P(A)][1-P(B)] notée Proba-non-cont est maximum.

Les arbres de classification présentés par les figures 4, 5, 6 et 7 permettent d'obtenir quatre classes :

contour fond, contour objet, contour caché et non contour. Or, il a été annoncé précédemment que les points seraient classés suivant cinq classes. En effet, une dernière information utile est d'avoir une classe représentant les contours du fond fixe situés dans les zones d'ombre. Les zones d'ombre peuvent être facilement obtenues grâce à une simple différence entre l'image courante et l'image de référence comparée à un seuil. Après classification, les contours du fond situés dans ces zones d'ombre sont alors classés en contours dans l'ombre que l'on notera contour ombré.

Chaque point de l'image courante possède maintenant deux étiquettes différentes. La première étiquette traduit l'appartenance du point à l'une des trois classes suivantes : fond, objet, et ombre. La deuxième étiquette traduit l'appartenance du point à l'une des cinq classes suivantes : contour fond, contour objet, contour caché, contour ombré et non contour. Selon l'invention, ces deux types d'étiquettes sont regroupées pour former un seul type d'étiquette à double information. Parmi toutes les combinaisons possibles, seules sept sont réalistes et sont donc retenues, elles sont notées :

- (fond, contour fond)
- (fond, non contour)
- (objet, contour objet)
- (objet, contour caché)
- (objet, non contour)
- (ombre, contour ombré)
- (ombre, non contour)

L'étiquetage initial est ainsi obtenu. Un masque est alors défini comme une région de points connexes et de même étiquette. Pratiquement, très peu d'incompatibilités entre les deux types d'étiquette sont observées et lorsqu'il y en a, dans la majorité des cas, c'est l'information de région qui est fausse.

En effet, l'étiquetage des régions, basé sur une différence inter-image comparée à des seuils, est beaucoup plus sensible au bruit d'image que l'étiquetage des contours. Lorsqu'une incompatibilité intervient, seule la partie d'étiquette correspondant à la région est modifiée de façon à obtenir une des sept étiquettes ci-dessus.

La détection d'objets précédente fournit une segmentation de l'image légèrement bruitée et pas suffisamment fine pour conduire à une interprétation exacte de la scène représentée sur l'image. De plus, si les résultats peuvent être corrects sur quelques images où le contraste entre les régions en mouvement et la référence est élevé, la robustesse du traitement et la stabilité de la segmentation deviennent critiques lorsqu'une séquence assez longue est traitée. Pour affiner cette segmentation, le procédé selon l'invention utilise les techniques statistiques d'estimation de Bayes connues de l'homme de l'art et développées dans l'ouvrage P.Y. ARQUES : "Décisions en traitement du signal". -Edition Masson- Collection technique et sciencifique des télécommunications- 1982.

Ces techniques font appel à des connaissances à priori que l'on peut inclure dans la modélisation. Comme ces connaissances s'expriment principalement en termes de contextes spatial et temporel, la modélisation par champs de Markov est bien adaptée à ce type de problèmes. Dans ce contexte, le choix d'une étiquette en un point ne dépend pas uniquement de l'observation en ce point comme c'est le cas pour l'étiquetage initial, mais ce choix dépend aussi de l'étiquetage du voisinage et plus précisément des connaissances à priori sur les relations entre ce point et son voisinage spatio-temporel. Un modèle traduisant ces relations devra être défini. La connaissance à priori est prise en compte en jouant sur les paramètres de ce modèle. L'avantage d'une telle technique est de pouvoir utiliser un critère global sur l'image, tout en effectuant des calculs à un niveau local qui est un voisinage spatio-temporel. La modélisation par champs Markoviens connue de l'homme de l'art est exposée dans l'ouvrage S. Geman, D. Geman : "Stochastic relaxation, Gibbs distributions and the Bayesian restoration of images". IEEE Trans. on Pattern Analysis and Machine Intelligence Vol.6 N°6 November 1984 . Elle est appliquée dans le procédé selon l'invention comme exposé ci-après.

En analyse d'images, comme dans les autres domaines, la formulation complète du problème passe par la définition précise des paramètres suivants :

- les observations : elles dépendent du type d'analyse effectué. Dans la plupart des cas, l'observation est fournie par l'image des niveaux de gris ;
- les primitives : elles dépendent aussi du type d'analyse. Dans la plupart des cas, elles sont assimilées à des étiquettes ;
- le système de voisinage et les cliques associées : le système de voisinage dépend de l'interaction entre les points. En général, pour des raisons de simplicité, le voisinage est limité à l'ordre 2 et à des cliques à 2 éléments seulement. Les cliques sont des ensembles de points connexes définis dans un voisinage ;
- les relations liant les primitives aux observations : elles traduisent la probabilité conditionnelle des observations ;
- les interactions locales entre les primitives : elles traduisent les connaissances à-priori ;

- la technique employée pour la minimisation du critère

Le procédé propre à l'invention donne les contenus à ces paramètres.

C'est à partir des observations que sont extraites les informations nécessaires et utiles à l'optimisation du champ des étiquettes. Ces observations dépendent des données disponibles et du problème à résoudre.

Nous disposons ici le plusieurs observations : la luminance de l'image courante et celle de l'image de référence, les contours de l'image courante et ceux de l'image de référence.

Comme nous l'avons vu, la détection de mouvement est principalement liée à la différence entre l'intensité lumineuse dans l'image courante et dans l'image de référence, ainsi qu'à la différence entre les contours de ces deux images. Il semblerait donc raisonnable d'utiliser les deux observations suivantes :

- l'observation $O_1$ est la différence inter-image entre l'image source et l'image de référence
- l'observation $O_2$ est la différence entre les contours de ces deux images.

Mais dans ces cas là, aucune information nouvelle n'intervient par rapport à l'étiquetage initial. La modélisation markovienne suivie de la maximisation du critère de type MAP utilisé généralement dans les processus markoviens ne va que conforter cet étiquetage initial tout en le débruitant. Les lettres MAP sont l'abréviation de l'expression Maximisation A Postériori.

Il paraît lors plus judicieux d'introduire de nouvelles informations et les deux observations utilisées par l'invention sont alors par exemple :

- L'observation $O_1$, la luminance de l'image courante
- L'observation $O_2$, la différence entre les contours de l'image courante et ceux de l'image de référence.

Les primitives sont les sept étiquettes définies précédemment, elles sont repérées de la façon suivante :

- primitive $L_1$ = étiquette (fond, contour fond)
- primitive $L_2$ = étiquette (fond, non contour)
- primitive $L_3$ = étiquette (objet, contour objet)
- primitive $L_4$ = étiquette (objet, contour caché)
- primitive $L_5$ = étiquette (objet, non contour)
- primitive $L_6$ = étiquette (ombre, contour ombré)
- primitive $L_7$ = étiquette (ombre, non contour)

Un système de voisinage d'ordre 2 peut être par exemple utilisé et seules les cliques à deux éléments sur ce voisinage peuvent être prises en compte. Ces cliques sont des ensembles de points connexes définis dans un voisinage. Ce type de clique associé au voisinage d'ordre 2 est suffisant pour exprimer les propriétés désirées du modèle choisi par l'invention. Les sites de l'image sont ici les points de l'image courante.

Les relations liant les primitives aux observations sont définies dans ce qui suit. Le critère du type MAP cherche à maximiser la distribution du champ des étiquettes E étant données les observations O, c'est à dire à maximiser la fonction de probabilité conditionnelle P(E/O) de l'observation O sur le champ des étiquettes E. Lorsqu'il existe deux observations, il faut maximiser la fonction de probabilité conditionnelle $P(E/O_1, O_2)$ des observations sur le champs des étiquettes E.

Compte tenu des règles de Bayes, et sachant que les observations sont indépendantes entre elles, il vient :

$$P(E/O_1, O_2) \ = \ \frac{P(O_1/E)P(O_2/E)P(E)}{P(O_1, O_2)}$$

P(E) est la probabilité relative au champ des étiquettes E et est déterminée par la définition des interactions locales entre les étiquettes.

En éliminant le terme constant $P(O_1, O_2)$ vis à vis du critère, il faut maximiser

$$P(E/O_1, O_2) \ = \ P(O_1/E)P(O_2/E)P(E)$$

Deux relations entre les observations et l'étiquetage sont alors introduites :

- Une issue de l'observation $O_1$ :

$$O_1(p) \ = \ \Phi_1(ep) \ + \ bb(p)$$

où

- $O_1(p)$ est l'observation de la luminance I(p,t) de l'image courante au point p et à l'instant t.
- bb(p) est un bruit blanc, gaussien, centré et de variance $\sigma^2$ au point p
- $\Phi_1(ep)$ est une fonction qui dépend de l'étiquette $e_p$ au point p et qui est définie par :

$$\Phi(ep) \ = \ \begin{cases} I_{ref}(p) & si \ e_p = L_1 \ ou \ L_2 \\ \\ moy\text{-}obj & si \ e_p = L_3 \ ou \ L_4 \ ou \ L_5 \\ moy\text{-}omb & si \ e_p = L_6 \ ou \ L_7 \end{cases}$$

En effet lorsque l'étiquette indique la présence du fond fixe, la luminance de l'image courante doit être égale à la luminance de l'image de référence. Les paramètres moy-obj et moy-omb sont estimés sur des zones de taille n x n centrées autour du point p. Ils représentent la valeur moyenne de la luminance des points ayant l'étiquette objet et ombre respectivement dans la zone de taille n x n considérée. Ce calcul est effectué en utilisant les étiquettes de l'étiquetage initial. Lorsqu'aucune étiquette objet et/ou ombre n'est présente dans la zone n x n, moy-obj et/ou moy-omb sont fixés à des valeurs arbitraires :

moy-obj = $m_1$ et moy-omb = $m_2$ par exemple.

L'autre relation est issue de l'observation $O_2$ telle que :

$$O_2(p) = \Phi_2(e_p, e_{préf}) + bb(p)$$

dans laquelle

$e_{préf}$ désigne l'étiquette contour dans la référence au point p obtenue après comparaison avec des seuils contours dans la référence avec des seuils.

$e_{préf}$ pouvant être classée en deux classes : contour ou non contour.

$O_2(p)$ désigne l'observation de la différence entre les contours de l'image courante et ceux de l'image de référence au point p. Cette différence porte sur l'amplitude et sur la direction si les contours observés dans la source et dans la référence sont de même nature, et sur l'amplitude seulement si ces contours sont de nature différente

$bb(p)$ est un bruit blanc, gaussien, centré et de variance $\sigma^2$ au point p

$\Phi_2$ fonction des étiquettes est définie par :

$CM_1$ si $(e_p, e_{préf})$       = $(L_1,$ contour$)$
$CM_2$ si $(e_p, e_{préf})$       = $(L_3,$ contour$)$
$CM_3$ si $(e_p, e_{préf})$       = $(L_4,$ contour$)$
$CM_4$ si $(e_p, e_{préf})$       = $(L_6,$ contour$)$
$CM_5$ si $(e_p, e_{préf})$       = $(L_2,$ non contour$)$
$CM_6$ si $(e_p, e_{préf})$       = $(L_3,$ non contour$)$
$CM_7$ si $(e_p, e_{préf})$       = $(L_5,$ non contour$)$
$CM_8$ si $(e_p, e_{préf})$       = $(L_7,$ non contour$)$

Les $CM_i$, i variant de 1 à 8, dépendent des images traitées. Ils peuvent être estimés sur quelques images, puis ensuite, ils restent fixes.

Toutes les combinaisons possibles $(e_p, e_{pref})$ ne sont pas représentées dans $\Phi_2$. En effet, lors de la classification des contours précédente le problème des incompatibilités entre la classe de contour attribuée au point source et la classe de contour dans la référence, a été évoquée. Les combinaisons du type :

- contour du fond fixe et non contour dans la référence
- contour caché et non contour dans la référence
- contour dans l'ombre et non contour dans la référence
- non contour et contour dans la référence sont interdites.

Ces incompatibilités se retrouvent entre les étiquettes $L_{i\,i=1,7}$ et les étiquettes contours de la référence.

Il est à noter aussi que chaque observation porte sur une partie différente, unique des étiquettes $L_{i\,i=1,7}$ puisque $O_1$ informe sur la partie des étiquettes se rapportant aux régions et $O_2$ informe sur la partie des étiquettes se rapportant aux contours, l'énergie traduisant le compatibilité des deux observations et du modèle markovien est définie par :

$$U_o \quad \sum_p \left[ \frac{(O_1(p) - \Phi_1(e_p))^2}{2\sigma^2} + \frac{(O_2(p) - \Phi_2(e_p, e_{pref}))^2}{2\sigma^2} \right] \qquad (1)$$

la variance du bruit $\sigma^2$, variant peu d'une image à l'autre, est estimée une fois pour toute au début de la séquence à traiter.

Ce qui suit définit les interactions locales entre les primitives. Comme les masques des objets en mouvement et leur ombre portée doivent avoir une certaine cohérence spatiale, cela implique une homogénéité et une continuité spatiale des étiquettes.

Dans la définition des potentiels d'énergie spatiaux, sur les cliques notamment, intervient alors la connaissance a-priori qui oriente l'étiquetage de manière à satisfaire ces différentes contraintes.

Si l'étiquetage double adopté selon l'invention n'est pas vraiment justifié jusqu'à maintenant, il prend toute son importance ici. En effet, puisqu'il comporte deux informations différentes sur le point, il impose des contraintes fortes sur la cohabitation de deux étiquettes dans une clique. Supposons qu'on ne soit en présence que de trois étiquettes : fond, ombre, objet. A priori, rien n'empêche d'avoir les étiquettes fond et objet côte à côte. Par contre, les étiquettes (fond, non contour) et (objet, non contour) ne peuvent pas appartenir à la même clique puisque si on passe d'un point appartenant au fond fixe à un point appartenant à un objet mobile, on croise forcément un contour d'objet en mouvement. La configuration la plus probable est dans ce cas (fond, non contour) et (objet, contour objet).

Certains auteurs comme Geman et Geman introduisent l'information contours en tant que sites complémentaires pour gérer les discontinuités, comme cela est développé par exemple dans l'article intitulé "Stochastic relaxation, Gibbs distributions and the Bayesian restoration of images". paru dans le volume n°6 "Pattern Analysis and Machine Intelligence" IEEE Novembre 1984. Ces sites complémentaires traduisent la présence ou non d'un contour entre deux points. Le potentiel sur les cliques est alors différent en présence ou en absence de contour. Mais comme l'information contour est binaire (présence d'un contour ou absence d'un contour) elle n'est pas suffisamment riche pour influencer correctement le potentiel. En effet, tous les contours dans l'image courante ne traduisent pas la présence de discontinuité de mouvement. Par exemple, dans le cas développé par Geman, il est difficile de savoir si la configuration fond et fond avec un contour entre, doit être favorisée ou non. Cela dépend de la nature du contour : si c'est un contour du fond fixe, cette configuration est acceptée sinon elle est rejetée. Sur cette base, il est difficile de trouver un potentiel qui s'adapte à tous les cas de figures. Aussi pour parvenir à ce résultat, le procédé selon l'invention classe les contours puis les introduit dans l'étiquette au lieu de les considére! comme des sites supplémentaires. L'information est alors plus pertinente, ce qui facilite la définition d'un potentiel d'énergie capable de s'adapter facilement à tous les cas de figure.

Soient deux points $p_1$ et $p_2$ appartenant à une clique c, le potentiel associé à cette clique est défini en prenant en compte trois informations de la manière suivante :

- Si la partie de l'étiquette correspondant aux régions en $p_1$ est identique à la partie de l'étiquette correspondant aux régions en $p_2$ alors

$$V_c^1 = -\beta.\ \text{Sinon},\ V_c^1 = +\beta.$$

$\beta$ est un nombre réel constant.

- Si la partie de l'étiquette correspondant aux contours en $p_1$ est identique à la partie de l'étiquette correspondant aux contours en $p_2$ alors

$$V_c^2 = -\beta.\ \text{Sinon}\ V_c^2 = +\beta.$$

- Si l'étiquette en $p_1$ est compatible avec l'étiquette en $p_2$ alors $V_c^3 = -\beta$. Sinon $V_c^3 = +\beta$.

Le potentiel total de la clique est

$$V_c = V_c^1 + V_c^2 + V_c^3.$$

Par exemple, soit le couple $L_1$, $L_3$, c'est à dire (fond, contour fond) et (objet, contour objet) :

- pour la partie des étiquettes correspondant aux régions : fond et objet le potentiel $V^1_c = +\beta$.
- pour la partie des étiquettes correspondant aux contours : contour fond fixe et contour objet le potentiel $V^2_c = +\beta$.
- Pour les étiquettes complètes, il n'y a pas d'incompatibilité donc le potentiel $V^3_c = -\beta$.

Pour le total des étiquettes, le potentiel $V_c = +\beta$.

Toutefois, lorsque les étiquettes en $p_1$ et $p_2$ sont incompatibles, il faut pénaliser au maximum cette configuration, quelles que soient les parties de chaque étiquette. En effet, les configuraitons (objet, non contour), (fond, non contour) et (objet, non contour), (ombre, non contour) étant incompatibles, on doit avoir $V_c = +3\beta$. Dans ces cas là, la technique ci-dessus ne doit pas être employée car elle associerait le potentiel $v_c = +\beta$ à ces configurations, ce qui ne traduit pas totalement l'incompatibilité.

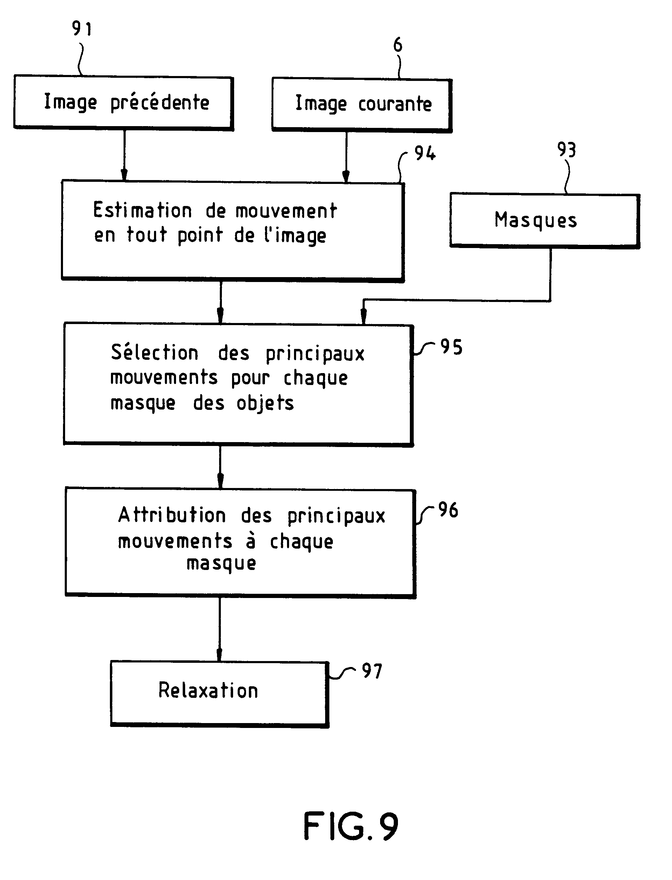

Ces résultats conduisent au tableau présenté par la figure 8. Ce tableau donne les valeurs du potentiel $V_c$ de la clique c, suivant les colonnes en fonction du point $p_1$ et des primitives L1 à L7 et suivant les lignes en fonction du point $p_2$ et des primitives $L_1$ à $L_7$.

Ce type de potentiel favorise la continuité des étiquettes au niveau des régions et des contours et contribue donc à la construction de zones homogènes grâce aux potentiels $V_c^1$ et $V_c^2$. De plus, il impose une contrainte supplémentaire qui gère les discontinuités grâce au potentiel $V_c^3$.

L'énergie spatiale définie sur les cliques est alors

$$U_c = \sum_{c \in C} V_c(e) \qquad (2)$$

où C est l'ensemble de toutes les cliques spatiales c de l'image courante. La valeur donnée à $\beta$ dépend de l'importance que l'on veut donner à l'énergie spatiale. Plus $\beta$ est grand, plus l'énergie spatiale a d'importance par rapport à l'énergie issue des observations, et plus l'effet de filtrage est important.

Comme le montre la figure 2, l'étape de détection d'objets se termine par un processus de relaxation 11. C'est par cette technique qu'est réalisé l'affinement de l'étiquetage et donc de la segmentation. Il s'agit, à partir de la configuration initiale des étiquettes, de trouver une configuration E = e telle que l'énergie totale $U^P = U_o + U_c$ soit minimum où $U_c$ est l'énergie sur les cliques, liée aux connaissances à priori sur les propriétés spatiales des masques à reconstruire et $U_o$ est l'énergie issue de la probabilité conditionnelle des observations traduisant la compatibilité entre l'observation et l'étiquetage. La configuration d'énergie minimum est en fait la configuration d'étiquettes la plus probable. Puisque l'étiquetage initial est suffisamment soigné et que les résultats qu'il fournit sont suffisamment proches des masques réels, son énergie est près du minimum global d'énergie et une technique de relaxation déterministe peut être utilisée. Pour cela l'énergie est calculée en chaque point avec l'étiquetage initial et il est vérifié en un point donné si le fait de changer son étiquette fait diminuer l'énergie. Si c'est le cas, le point est dit instable et il lui est attribué l'étiquette qui contribue à la plus grande diminution d'énergie. L'énergie des points voisins s'en trouvant alors modifiée, cette dernière doit être recalculée. Puis un autre point est ensuite traité.

Mais dans le cas présent, n'importe quelle étiquette ne peut cependant être essayée en un point donné. En effet, il faut. respecter la contrainte de compatibilité avec l'étiquette contour de fond.

Si le point considéré est un contour dans le fond, il possède alors une des quatre étiquettes : $L_1$, ou $L_3$ ou $L_4$ ou $L_6$. Si son étiquette courante, issue de l'étiquetage initial, est $L_3$ par exemple, il ne lui sera proposé alors que les étiquettes $L_1$, $L_4$ et $L_6$. Si le point considéré est un non contour dans le fond, il possède alors une des quatre étiquettes : $L_2$ ou $L_3$ ou $L_5$ ou $L_7$. Si son étiquette courante issue de l'étiquetage initial est $L_5$ par exemple, il ne lui sera proposé alors que les étiquettes $L_2$, $L_3$ et $L_7$. Ainsi l'étiquetage minimisant l'énergie est toujours compatible avec l'étiquetage contour du fond après relaxation.

Plusieurs méthodes de scrutation des points sont envisageables et connues de l'homme de l'art parmi lesquelles notamment le balayage séquentiel, le tirage aléatoire ou le processus utilisant la pile d'instabilité. Cette troisième méthode introduite par P. B. CHOU et R. RAMAN, apparaît la mieux adaptée au procédé selon l'invention. Cette technique est développée dans l'article "On relaxation algorithms based on Markov Random fields de P. B. CHOU et R. RAMAN paru dans le rapport technique n° 212 de l'Université de ROCHESTER (Computer Science Department), Etats Unis, Juillet 1987.

Les résultats obtenus après relaxation et présentés précédemment ne sont pas suffisants pour interpréter correctement les scènes représentées par les images. Le problème majeur réside en effet dans la présence de plusieurs objets différents appartenant à un même masque. Dans la scène de trafic routier par exemple, cela se produit notamment lors de croisements ou de dépassements de véhicules. Pour interpréter correctement la scène, il faut alors pouvoir d'une part distinguer les masques ne contenant qu'un objet de ceux en contenant plusieurs, et d'autre part, être capable de séparer les différents objets appartenant à un même masque. A cet effet, dans le procédé selon l'invention tel que représenté à la figure 1, l'étape 1 de détection d'objets est suivi d'une étape 2 de séparation des objets connexes contenus dans un même masque. Cette séparation est possible grâce à la prise en compte du mouvement. Si des objets appartiennent à un même masque et ont des mouvements différents, il est alors possible de les différencier. L'estimation de mouvement doit être fiable et doit fournir un résultat suffisamment filtré pour permettre de trouver les frontières délimitant les différents objets à l'intérieur d'un même masque. La plupart des techniques d'estimation de mouvement fournissent des résultats trop bruités, c'est pourquoi pour pallier cet inconvénient, le procédé selon l'invention réalise l'étape 2 de séparation des objets connexes suivant quatre phases distinctes comme représenté par l'organigramme de la figure 9.

A partir de l'image précédente 91 et de l'image courante 6, une première phase 94 procède à une estimation de mouvement en tout point de l'image. Une deuxième phase 95, par analyse du champs de mouvements précédemment défini réalise une sélection de quelques vecteurs de mouvement pour chaque masque 93, définissant ainsi des mouvements principaux puis une troisième phase 96 attribue ces vecteurs de mouvement à chaque point des masques. Cette attribution constituera une estimation du mouvement initial. Enfin une quatrième phase 97 optimise l'estimation initiale grâce à une technique de relaxation avec modélisation markovienne du champs de mouvement. Cela permet encore une fois de prendre en compte des connaissances à priori et d'obtenir un résultat suffisamment filtré pour séparer chaque objet à l'intérieur d'un même masque.

La présentation détaillée de l'étape 2 de séparation des objets connexes est exposée dans ce qui suit. L'objectif n'est pas ici de développer une méthode d'estimation de mouvement car ces méthodes sont bien connues de l'homme de l'art. L'estimation de mouvement utilisé par l'invention est celle présentée dans le brevet n°2 648 254 déposé par la demanderesse.

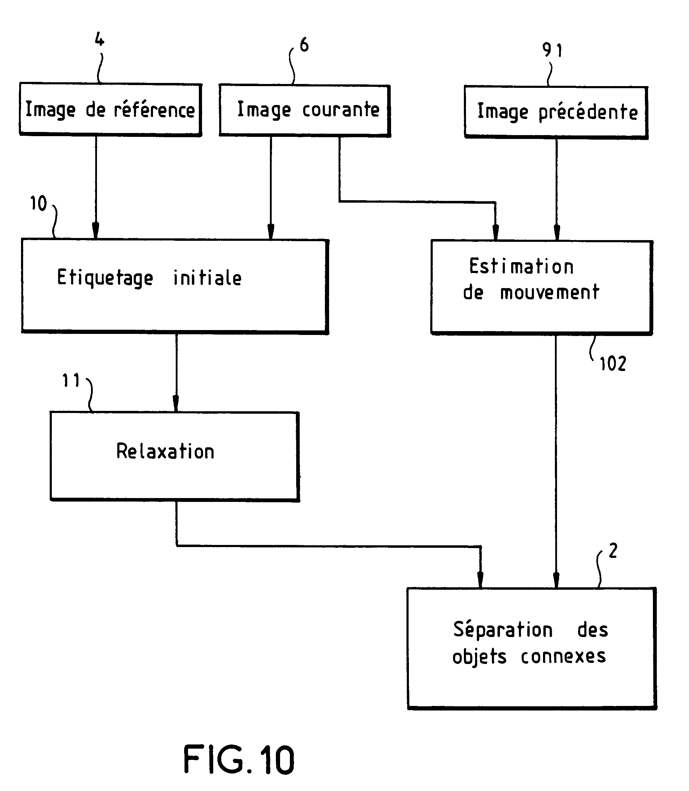

En fait comme le montre l'organigramme de la figure 10, où les étapes homologues à celles des organigrammes des figures 2 et 9 sont représentées avec les mêmes références ; l'estimation de mouvement se déroulant dans l'étape 2 peut être conduite en parallèle avec les traitements de l'étape 1. L'image de référence 4 et l'image courante 6 sont utilisées pour l'étape 1 représentée ici de façon simplifiée par les phases l'étiquetage initial 10 et de relaxation 11. L'estimation de mouvement 102 prend en compte l'image courante 6 et l'image précédente 91 et se déroule parallèlement à l'étape 1. La suite de l'étape 2 de séparation des objets connexes utilise les données résultant le la relaxation 11 de l'étape 1 et de l'estimation de mouvement 102. Cela permet d'utiliser un estimateur de mouvement suffisamment fiable, fournissant des résultats robustes et de bonne qualité, sans retarder le déroulement du traitement. Néanmoins, bien que robuste et fiable, l'estimation de mouvement ne peut pas être directement utilisée car elle reste trop bruitée. En effet, le principal défaut des estimateurs, notamment le type d'estimateur point à point employé et basé sur la minimisation de la différence inter-image déplacée DFD est de ne pas fonctionner correctement dans les zones à luminance constante. Le sigle DFD correspond aux initiales de l'expression anglo-saxonne "Displaced Frame Difference". Dans ces zones homogènes, le vecteur mouvement résultat est en général le vecteur nul.

Dans ce cas, l'optimisation du champ de mouvement par une technique de relaxation ne peut fournir de bons résultats car ses faux mouvements ne sont pas éliminés puisqu'ils sont cohérents au sens de la DFD.

Cependant, comme le champ de mouvement estimé fournit le mouvement exact sur la majorité des points de chaque masque, il suffit de sélectionner ces mouvements exacts pour chaque masque, puis de les attribuer à chaque point du masque, pour que les faux mouvements soient éliminés. La sélection des principaux mouvements pour chaque masque se fait en construisant l'histogramme des vecteurs de mouvement sur chacun des masques et en sélectionnant les maxima locaux de cet histogramme. Ainsi, chaque masque possède n vecteurs de mouvement candidats. Idéalement, si n objets différents sont présents dans un même masque, la sélection des maxima locaux de l'histogramme des mouvements sur ce masque devrait fournir n vecteurs de mouvement. En fait, la sélection des mouvements candidats fournit en général toujours plus de candidats que d'objets effectivement présents dans chaque masque. Cependant n reste faible, c'est-à-dire que le nombre de candidats supplémentaires reste toujours inférieur ou égal à 3. Ces vecteurs de mouvement sont attribués à chaque point du masque sur la base de la valeur absolue minimum de la DFD. C'est à dire que pour chaque point de masque, la DFD est calculée avec chaque mouvement candidat, et au point, est attribué le mouvement fournissant la valeur absolue minimum de la DFD. Pour plus de robustesse, la DFD est calculée par exemple sur un bloc de 3x3 points centré autour du point considéré.

Cette technique a pour principal avantage d'éliminer les faux mouvements, en particulier dans les zones homogènes, mais comme le nombre de vecteurs candidats est en général supérieur au nombre d'objet dans chaque masque, le résultat reste encore trop bruité pour pouvoir séparer les objets à mouvements différents dans un même masque. C'est pourquoi selon l'invention, une technique d'optimisation du champ de mouvement, opérant sur chaque masque, a été mise en oeuvre.

L'optimisation du champ de mouvement est effectuée par une technique de relaxation avec modélisation markovienne du champ de mouvement. Le résultat qui est obtenu permet de distinguer les masques ne contenant qu'un objet des masques possédant plusieurs objets et dans ce cas, de délimiter la séparation entre les différents objets.

Comme pour la modélisation markovienne du champ des étiquettes décrit précédemment, il est nécessaire de définir les différents paramètres concernant un masque donné.

En ce qui concerne les observations, l'estimation de mouvement repose sur l'hypothèse fondamentale d'invariance de la luminance, l'intensité lumineuse d'un point image étant supposée invariante entre deux instants d'observation t et t-dt. En supposant qu'un point de coordonnées (x,y) se déplace de $D = (DX,DY)$ de l'instant t-dt à l'instant t, selon l'hypothèse d'invariance faite précédemment, l'identité des intensités lumineuses permet d'écrire la relation :

$$I(p,t) = I(p - D, t - dt)$$

De ce fait l'observation, qui doit être indépendante de l'étiquette et indépendante du mouvement est alors ici définie par la lumlnance de l'image courante.

Les primitives sont des vecteurs de mouvement $D^i, i = 1,n$ sélectionnés dans l'histogramme des mouvements et attribués en chaque point. L'étiquette en un point p est notée $D_p$ et prend ses valeurs dans $L = (D^1,...,D^n)$.

En ce qui concerne le système de voisinage et les cliques, comme pour le champ des étiquettes de la segmentation, un voisinage d'ordre 2 et les cliques à deux éléments sur ce voisinage sont utilisés.

Les relations liant les primitives aux observations sont définies dans ce qui suit. Si à un point p est attribué un déplacement $D_p$, alors, selon l'hypothèse d'invariance de la luminance, l' intensité lumineuse en ce point est égale à celle du point déplacé dans l'image précédente. Si $I(p,t)$ désigne la luminance dans l'image courante et $I'(p,t)$ la luminance non bruitée, alors :

$$I(p,t) = I'(p,t) + bb(p)$$
$$= I'(p-D_p,t-dt) + bb(p)$$
$$= I(p-D_p,t-dt)-bb(p-D_p)+bb(p)$$

La relation liant les observations aux étiquettes de mouvement est alors une relation de la forme :

$$O(p) = \Phi(D_p) + bb(p) - bb(p - D_p)$$

où

$O(p)$ désigne l'observation de la luminance de l'image courante au point p : $I(p,t)$

$bb(p)$ est un bruit blanc, gaussien, centré et de variance $\sigma^2$ au point p

$\Phi(D_p)$ est égale à la luminance $I(p-D_p,t-dt)$

L'énergie à minimiser est alors définie par la relation

$$U_o = \sum_P \left[ \frac{(I(p,t) - I(p-D_p,t-dt))^2}{4\sigma^2} \right] \quad (3)$$

Il est possible de faire l'analogie avec des méthodes différentielles d'estimation de mouvement qui cherchent à minimiser la différence inter-image déplacée DFD qui vaut par définition :

$$DFD = I(p,t) - I(p - D, t - dt)$$

C'est bien ce qui est réalisé quand l'énergie $U_o$ est minimisée. $\sigma^2$ est la variance du bruit dans l'image. C'est la même que celle estimée pour le champ des étiquettes de l'étape 1 de détection d'objets.

En ce qui concerne l'établissement des interactions locales entre les primitives, une fonction traduisant la compatibilité entre deux vecteurs de mouvement dans une clique est recherchée. Cette fonction doit favoriser une homogénéité et une certaine compacité dans le résultat de l'attribution, permettant ainsi de trouver facilement la frontière entre deux objets en mouvement.

De la segmentation décrite dans l'étape 1, il découle que chaque point dans l'image appartenant à un masque des objets en mouvement possède une des trois étiquettes : $e_p = L_3$ (objet, contour objet) ou $L_4$ (objet, contour caché) ou $L_5$ (objet, non contour), la différence résidant dans l'information contour. La fonction traduisant la compatibilité de deux vecteurs de mouvement dans la clique va favoriser la présence du même mouvement sur les points de la clique si ceux-ci ont la même étiquette $e_p$. Si les points ont une étiquette $e_p$ différente, il n'est pas possible d'influencer l'attribution du mouvement, en particulier, aucune information n'indique si un contour voisin d'un non contour appartient ou non au même objet.

Soient deux points $p_1$ et $p_2$ appartenant à une clique, le potentiel sur cette clique est alors défini par :

$$V_c(D_p) \begin{cases} -\beta & \text{si } D_p = D_{p2} \text{ et } e_{p1} = e_{p2} \\ +\beta & \text{si } D_{p1} \neq D_{p2} \text{ et } e_{p1} = e_{p2} \quad (4) \\ 0 & \text{si } e_{p1} \neq e_{p2} \end{cases}$$

L'énergie spatiale sur les cliques est alors défini par :

$$U_c = \sum_{c \in C} V_c(D)$$

Enfin, une technique de relaxation déterministe pour minimiser le critère MAP est employée par le procédé selon l'invention. Cette technologie nécessite un état initial dont l'énergie est proche de l'énergie minimum globale. Dans le cas du mouvement, le critère à minimiser étant la DFD, celui-ci est proche du minimum global d'énergie puisque l'attribution du mouvement sur chaque point du masque a été faite sur la base de la DFD minimum.

La minimisation du critère peut être identique à celle utilisée dans l'étape 1 de détection d'objets.

La stratégie de visite des sites employée peut être celle utilisant une pile d'instabilité par exemple, ainsi, les points traités en premier sont donc ceux où la DFD est vraiment significative. Les points où la DFD est moins significative, cas où la DFD a même valeur pour plusieurs vecteurs de mouvement, sont traités en dernier et ils bénéficient ainsi du filtrage introduit dans le définition du potentiel sur les cliques.

A la fin de l'étape 2 de séparation des objets connexes, il apparaît que le mouvement a effectivement permis de séparer les différents objets à l'intérieur d'un même masque. Lorsqu'un masque ne contient qu'un objet, le mouvement attribué sur le masque est identique en tout point du masque. Cependant, la séparation n'est pas toujours nette, ce qui tend à prouver que la technique n'est pas suffisamment robuste. Ce manque de robustesse provient dans la plupart des cas du fait que la DFD minimum n'est pas un critère suffisamment fiable pour attribuer un mouvement. De plus, l'énergie définie sur les cliques n'est pas aussi restrictive qu'elle l'était dans le cas de l'étape 1 de détection d'objets, il apparaît alors qu'une valeur de prédiction temporelle du mouvement pourrait augmenter la robustesse du système.

La prédiction temporelle va alors agir aussi bien au niveau des étiquettes (régions, contours) qu'au niveau de l'attribution du mouvement. Elle constitue la dernière étape du procédé selon l'invention.

Jusqu'à cette dernière étape de prédiction temporelle, le lien temporel existant naturellement entre les images successives de la séquence n'a pas été exploité. Le procédé selon l'invention prend en compte cette information afin d'augmenter la robustesse de la détection des objets. Un objet mobile vu à un instant donné dans la scène est en général vu à l'instant suivant. Cependant, le détecteur décrit précédemment n'est pas toujours en mesure d'extraire correctement cet objet, car lors de son déplacement, le contraste entre l'objet et la référence peut changer et devenir très faible de telle sorte que le détecteur va confondre l'objet et le fond. L'information utile peut être présente dans une image et absente dans l'autre, c'est pour cela qu'il faut la propager temporellement. L'étiquetage initial n'étant pas toujours suffisant pour conduire à une segmentation correcte de la scène présente sur l'image, celui-ci sera enrichi dans l'étape 1 de détection d'objets d'une image prédite temporellement et issue de la projection de chaque masque des objets mobiles dans le sens de leurs mouvements.

De même, comme précédemment cité, l'attribution initiale du mouvement n'est pas assez robuste pour conduire à une séparation correcte des objets connexes, celle-ci sera enrichie dans l'étape 2 d'un champ de mouvement prédit temporellement et issue de la projection temporelle du champ de mouvement précédent.

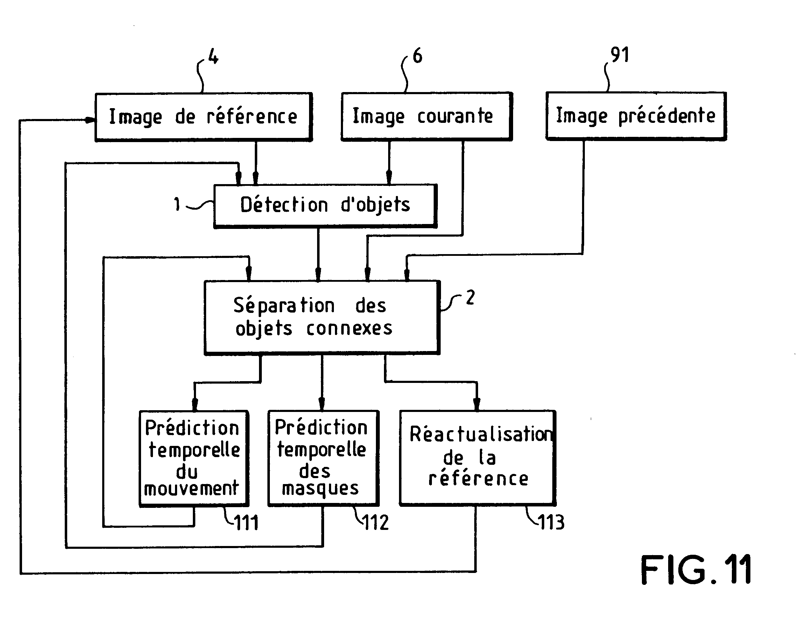

L'étape 3 de prédiction temporelle est représentée sur la figure 11 qui expose l'organigramme général du procédé selon l'invention. Elle est composée de trois phases se déroulant en parallèle, une phase 111 de prédiction temporelle du mouvement, une phase 112 de prédiction temporelle des masques et une phase 113 de réactualisation périodique de l'image de référence 4. Ces trois phases s'intègrent de la façon suivante dans l'organigramme de la figure 11 :

L'image de référence 4 et l'image courante 6 ainsi que l'image des masques des objets prédits temporellement par la phase 112 sont utilisés pour l'étape de détection d'objets 1. L'étape de séparation des objets connexes 2 traite le résultat de la segmentation issu de l'étape précédente 1 qui fournit les masques des objets, à l'aide de l'image courante 6, de l'image précédente 91 et du champ de mouvement prédit temporellement par la phase 111. Pour plus de clarté dans l'exposé, la participation des phases 112 et 111 dans les étapes 1 et 2 respectivement n'a pas été mentionnée dans la présentation précédente de ces deux étapes, leur rôle sera développé par la suite. Le résultat de la séparation des objets connexes permet aussi de procéder à une réactualisation périodique de l'image de référence afin de prendre en compte les variations d'éclairage.

La dernière étape 3 du procédé selon l'invention est détaillée dans ce qui suit.

Lors de l'étape 2 précédente de séparation des objets connexes, une valeur de mouvement a été attribuée à chaque point des masques des objets. Cela a permis d'une part d'avoir une estimée du mouvement de chaque objet et d'autre part de séparer les objets à l'intérieur d'un même masque.

Le mouvement d'un objet variant peu d'une image à l'autre, il est possible d'obtenir une prédiction de la position de chaque objet en projetant celui-ci dans la direction de son mouvement estimé. Ainsi, à l'instant t, une image de prédiction des objets qui servira à la segmentation de l'image suivante à l'instant t+dt est construite. L'image prédite est une image binaire car seules les informations fond et objet y sont présentes. En effet, les régions correspondant à l'ombre des objets ne sont pas toujours séparés ni séparables les unes des autres, Ne sachant pas à quel objet elles appartiennent il est préférable de ne pas les projeter pour éviter d'introduire de fausses informations dans l'image de prédiction.

La prédiction temporelle est effectuée très simplement en balayant l'image de manière usuelle et en projetant chaque point appartenant aux masques des objets dans la direction de son mouvement estimé. L'information temporelle qui en résulte est prise en compte dans le processus de relaxation à l'étape 1. Pour ce faire, l'image prédite temporellement est introduite dans le processus markovien afin d'améliorer la détection de mouvement. Pour prendre en compte cette information il est nécessaire de reformuler la modélisation markovienne appliquée à la détection de mouvement utilisé dans l'étape 2 de séparation des objets connexes.

Les observations, les primitives ainsi que la relation entre elles restent inchangées. L'énergie traduisant la compatibilité entre l'étiquetage et les observations à minimiser est donnée par la relation (1). On peut toutefois noter que le calcul de moy-obj qui estime la luminance moyenne des objets par régions peut être amélioré si on considère les étiquettes objets de l'étiquetage initial et celles de l'image de prédiction.

Le système de voisinage spatial d'ordre 2 est conservé. Un élément supplémentaire, constituant le système de voisinage temporel lui est ajouté. Ce nouveau voisinage est constitué du point courant et du point de même coordonnées spatiales dans l'image de prédiction.

Etant donné cette structure de voisinage, les cliques spatiales à deux éléments sont aussi conservées et une nouvelle clique sur le voisinage temporel est introduite.

Les interactions locales entre les primitives sur les cliques spatiales restent alors inchangées. L'énergie sur les cliques spatiales est donnée par la relation (2) et les potentiels élémentaires sur ces cliques sont ceux définis dans le tableau de la figure 8.

L'énergie sur les cliques temporelles traduit la compatibilité entre les étiquettes de l'image courante e appartenant à l'ensemble $L_1, L_2, L_3, L_4, L_5, L_6, L_7$ et les étiquettes de l'image de prédiction $e_\tau$ appartenant à l'ensemble objet,fond . Ici, l'étiquette fond correspond aussi bien au fond fixe qu'au fond ombré. Cette énergie doit alors être définie de manière à favoriser la continuité temporelle de l'étiquetage.

L'étiquette fond dans la prédiction est une étiquette absente d'information utile pour influencer l'étiquetage de l'image courante. En effet, cette étiquette est porteuse d'une information trop générale. De plus, pour favoriser la prise en compte de nouvelles détections telles que des apparitions d'objets, des lacunes dans la prédiction, des déformations ou de nouvelles géométries des objets par exemple, l'étiquetage de l'image courante ne doit pas être influencé si l'étiquette de la prédiction ne mentionne pas la présence d'objet. Par contre, la présence d'une étiquette objet dans la prédiction en un point donné, doit correspondre à une étiquette indiquant la présence d'un objet dans l'image courante, soit les étiquettes $L_3$ ou $L_4$ ou $L_5$. L'énergie sur les cliques temporelles est alors :

$$U_{ct} = \sum_{c_\tau \in C_\tau} V_{c_\tau}(e) \qquad (6)$$

où

$C_\tau$ est l'ensemble de toutes les cliques temporelles $c_\tau$ de l'image

$V_{c_\tau}(e)$ est le potentiel élémentaire défini sur la clique temporelle. Soit $e_p$ l'étiquette de l'image courante au point p et $e_\tau$ l'étiquette de la clique temporelle, compte tenu des remarques ci-dessus, la valeur du potentiel est fournie par :

$$V_{c_\tau} = \begin{cases} -\beta' \text{ si } e_\tau = \text{objet mobile et } e_p = L_3 \text{ ou } L_4 \text{ ou } L_5 \\ +\beta' \text{si } e_\tau = \text{objet mobile et } e_p = L_1 \text{ou} L_2 \text{ou } L_6 \text{ou} L_7 \\ 0 \quad \text{ si } e_\tau = \text{fond} \end{cases}$$

Comme pour la valeur $\beta$ utilisée dans l'étape de détection d'objets, la valeur de $\beta'$ dépend de l'importance que l'on veut donner à l'énergie temporelle. Plus $\beta'$ est grand, plus l'énergie temporelle a d'importance par rapport à l'énergie spatiale et à l'énergie issue des observations et plus l'effet de filtrage temporel sera important. L'énergie totale à minimiser est :

$$Up = U_o + U_c + U_{c\tau}$$

où $U_o$ est donné par la relation (1), $U_c$ est donnée par la relation (2) et $U_{c\tau}$ est donnée par la relation (6)

La minimisation est effectuée par la technique de relaxation définie lors des étapes précédentes.

De la même manière, qu'il est possible d'obtenir une prédiction de la position de chaque objet pour l'instant suivant t+dt, il est possible d'obtenir une prédiction du mouvement de chaque objet prédit à t+dt en projetant temporellement le champ de mouvement estimé à t.

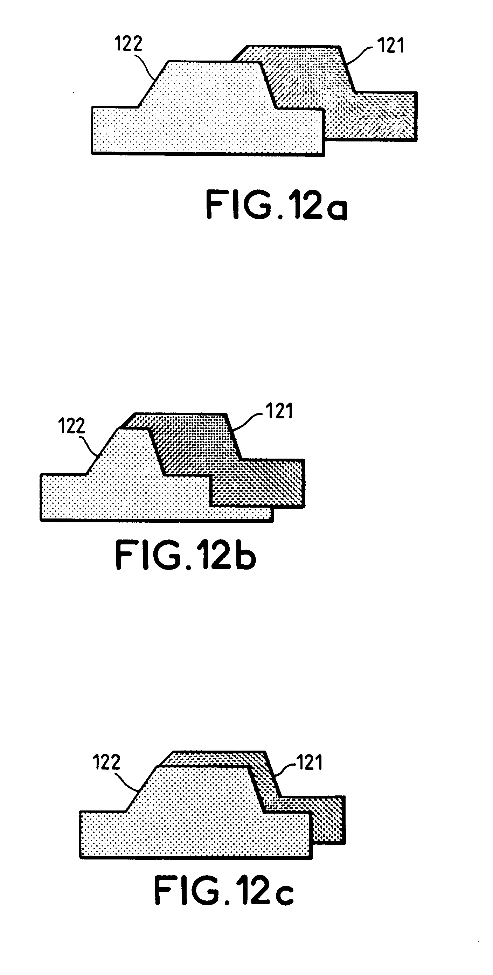

Le champ de mouvement prédit n'est pas une image binaire comme dans le cas précédent de prédiction temporelle des masques où il fallait simplement prédire l'information objet ou non objet. La prédiction temporelle du champ de mouvement n'est pas alors si simple car elle doit gérer le problème des occlusions, cas où un objet ou une partie d'objet est caché par un autre. C'est le cas par exemple où deux objets connexes ont des valeurs de mouvement différentes. Une illustration de cet exemple est montré figure 12a où l'objet 121 est en partie caché par l'objet 122 et possède un mouvement de la droite vers la gauche d'amplitude supérieur à celui de l'objet 122.

Si la prédiction temporelle du mouvement est effectuée comme précédemment en balayant l'image de manière séquentielle et en projetant chaque vecteur de mouvement dans sa propre direction, l'objet 121 de la figure 12a va se retrouver devant l'objet 122 comme le montre la figure 12b alors que c'est le contraire qui se produit. Une partie du champ de mouvement prédit va alors être fausse.

Pour gérer correctement ce genre de problème, la projection est effectuée objet par objet, c'est à dire que tous les points d'un même objet sont projetés en même temps. De plus, l'ordre de projection des objets ne doit pas être quelconque puisque dans le cas de la figure 12a, si l'objet 122 est projeté avant l'objet 121, le cas de figure 12b est alors reproduit.

Dans la plupart des cas, la caméra enregistrant la scène est surélevée par rapport à celle-ci. Dans ce cas, comme le montre la figure 12a, les objets dont la base est située le plus haut dans l'image sont les objets risquant d'être en partie caché par des objets dont la base est située plus basse. Ces objets là doivent être projetés en premier. Dans le cas de la figure 12a, l'objet 121 dont la base est plus haute que celle de l'objet 122 doit alors être projeté en premier, ce qui conduit au résultat montré sur la figure 12c.

La prédiction temporelle du mouvement est donc effectuée objet par objet avec un ordre bien particulier, notamment les objets les plus hauts dans la scène sont projetés en premier.

La façon dont cette information temporelle est prise en compte dans le processus de relaxation de l'étape 2 est indiquée dans ce qui suit :

L'image du mouvement prédit temporellement est introduite dans le processus markovien de l'étape 2 afin d'améliorer la séparation des objets connexes. De la même manière que pour la prise en compte de la prédiction temporelle des objets, la modélisation markovienne appliquée à l'estimation de mouvement sur une région donnée introduite dans l'étape 2 doit être reformulée.

L'observation, les primitives ainsi que les relations entre elles restent inchangées. L'énergie traduisant la compatibilité entre l'étiquetage et l'observation à minimiser est donnée par la relation (3).

Le système de voisinage spatial d'ordre 2 est conservé. Un élément supplémentaire, constituant le système de voisinage temporel lui est ajouté. Il est identique à celui défini précédemment.

Les cliques spatiales à deux éléments sont aussi conservées et seules la nouvelle clique sur le voisinage temporel est introduite.

Les interactions locales entre les primitives sur les cliques spatiales restent alors inchangées. L'énergie sur les cliques spatiales est donnée par la relation (5) et les potentiels élémentaires sur ces cliques sont ceux définis par la relation (4).

L'énergie sur les cliques temporelles traduit la compatibilité entre le mouvement issu de l'attribution initiale $D_\varepsilon\{D1_{t+dt},...,D^n_{t+dt}\}$ et le mouvement prédit $D_\tau\{D^1_t,...,D^m_t\}$.

Puisque le mouvement varie peu d'une image à l'autre, cette énergie doit alors être définie de manière à favoriser cette faible variation. Chaque point des objets possède une valeur de mouvement prédite $D_t$ et n valeurs mouvement candidates issues de l'histogramme sur l'estimation de mouvement en tous points. Le problème est de savoir quelle valeur de mouvement candidate favoriser connaissant $D_\tau$. Une distance est alors définie entre la valeur prédite et chaque valeur candidate. L'estimée de mouvement candidate favorisée sera celle qui fournit la plus petite distance.

Soient :

$DX_\tau$ et $DY_\tau$ le mouvement horizontal et vertical prédit.

$D_\tau = (DX_\tau, DY_\tau)$

et

$DX^i$ et $DY^i$, i = 1,..., n les mouvements horizontaux et verticaux candidats.

$D^i = (DX^i, DY^i)$

La distance entre $D_t$ et $D^i$ est définie par :

$$DIST_i = \sqrt{(DX_\tau - DX^i)^2 + (DY_\tau - DY^i)^2}$$

L'énergie des cliques temporelles est alors définie par :

$$U_{c\tau} = \sum_{c_\tau \in C_\tau} V_{c_\tau}(e) \qquad (7)$$

15

où

- $C_\tau$ est l'ensemble de toutes les cliques temporelles $c_\tau$ de l'image
- $V_{c\tau}(e)$ est le potentiel élémentaire défini sur la clique temporelle. Compte tenu des remarques ci-dessus, la valeur de ce potentiel est fourni par :

$$V_{c_\tau} = \begin{cases} -\beta' & \text{si } DIST_i < DIST_j \;\; i = j, \;\; i,j = 1,\ldots,n \\ \\ 0 & \text{sinon} \end{cases}$$

L'énergie totale à minimiser est alors :

$$U_p = U_o + U_c + U_{c\tau}$$

où $U_o$ est donnée par la relation (3), $U_c$ est donnée par la relation (5) et $U_{c\tau}$ est donnée par la relation (7).

La minimisation est effectuée par la technique de relaxation définie lors des étapes précédentes.

La prédiction temporelle des objets et du mouvement augmente considérablement la robustesse du système pour deux raisons principales qui sont d'une part, que chaque prédiction améliore individuellement les résultats et d'autre part, ces prédictions interagissent du fait des boucles imbriquées. En effet, la prédiction des objets améliore leur détection, l'histogramme des mouvements est alors construit sur des zones objet plus exactes et fournit de meilleures estimées de mouvement ce qui améliore la séparation des objets. Les objets étant correctement estimés, leur prédiction s'en trouve améliorée.

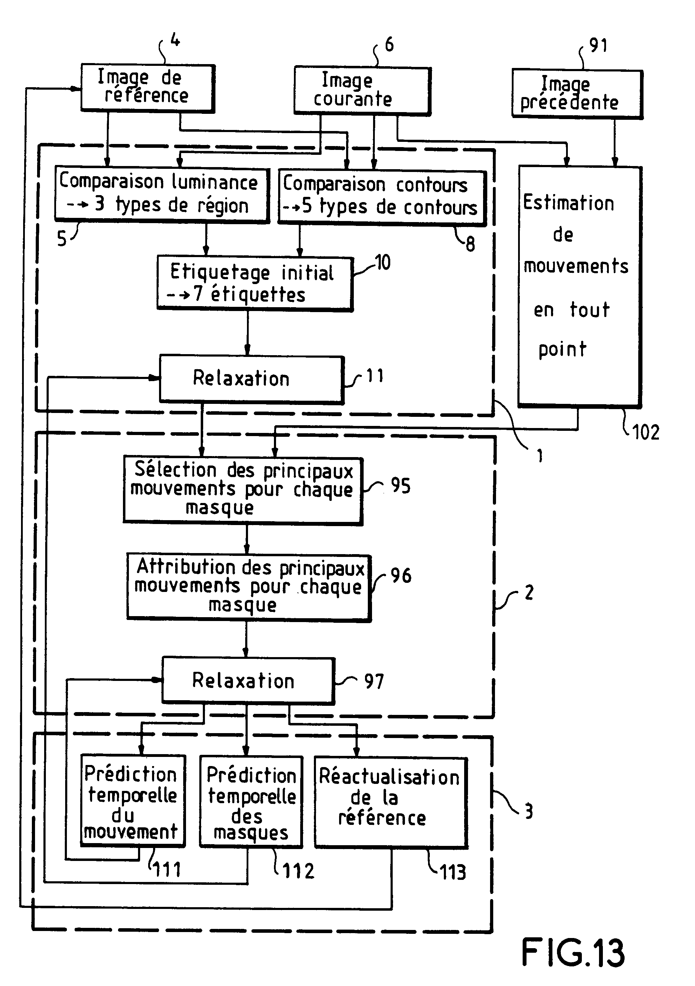

En récapitulation des étapes précédentes, le schéma de la figure 13 représente un organigramme détaillé du procédé selon l'invention. Les traits en pointillés délimitent les trois étapes, 1, 2 et 3 du procédé. Les phases associées à ces étapes sont représentées avec les mêmes références que leurs homologues utilisées dans les figures précédentes.

**Revendications**

1. Procédé le détection et de suivi d'objets en mouvement par analyse de séquences d'images caractérisé en ce qu'il est constitué d'une première étape (1) de détection d'objets conduisant à l'élaboration le masques d'objets mobiles et à ceux de leurs ombres portées, d'une deuxième étape (2) de séparation des objets connexes contenus dans un même masque par des critères de mouvement, et d'une troisième étape (3) de prédiction et de suivi temporel de la position et du mouvement des objets.

2. Procédé selon la revendication 1 caractérisé en ce qu'il réalise la segmentation des images en trois classes (7) représentant le fond, les objets et les ombres.

3. Procédé selon les revendications 1 et 2 caractérisé en ce qu'il réalise la segmentation des images par comparaison (5) des luminances entre une image de référence (4) et l'image courante (6).

4. Procédé selon la revendication 3 caractérisé en ce que l'image de référence (4) est périodiquement réactualisée (113).

5. Procédé selon l'une quelconque les revendications 1 à 4 caractérisé en ce qu'il réalise une comparaison (8) des contours entre l'image le référence et l'image courante (6).

6. Procédé selon l'une quelconque des revendications 1 à 5 caractérisé en ce qu'il réalise une classification des points de l'image suivant cinq classes (9) représentant les contours du fond, les contours d'objets en mouvement, les contours du fond cachés par un objet en mouvement, les contours du fond situés dans une zone d'ombre et les points n'appartenant à aucun contour.

7. Procédé selon l'une quelconque des revendications 1 à 6 caractérisé en ce qu'il attribue a chaque point de l'image une étiquette à double information comportant une information de région prenant en compte la classification des points issue de la comparaison des luminances (5) entre l'image de référence (4) et l'image courante (6) et une information de contour prenant en compte la classification des points issue de la comparaison des contours (8) entre l'image de référence (4) et l'image courante (6).

8. Procédé selon la revendication 7 caractérisé en ce qu'il réalise une classification des points de l'image suivant sept classes correspondant chacune à un des sept types d'étiquettes à double information de région et de contour.

9. Procédé selon l'une quelconque des revendications 1 à 8 caractérisé en ce qu'il utilise une méthode de relaxation (11) avec modélisation markovienne du champ des étiquettes à double information pour l'optimisation de la classification des points de l'image selon les sept classes dans l'étape de détection d'objets (1).

10. Procédé selon l'une quelconque des revendications 1 à 9 caractérisé en ce qu'il réalise une séparation des objets connexes (2) sur la base du mouvement incluant une relaxation (97) avec modélisation markovienne du champ de mouvement.

11. Procédé selon l'une quelconque des revendications 1 à 10 caractérisé en ce qu'il effectue une prédiction temporelle des masques (112) pour l'optimisation de la classification des points selon les sept classes dans l'étape de détection d'objets (1).

12. Procédé selon l'une quelconque des revendications 1 à 10 caractérisé en ce qu'il effectue une prédiction temporelle du mouvement (111) pour optimiser la séparation des objets connexes (2).

1

Détection d'objets

2

Séparation des objets connexes

3

Prédiction et suivi temporel

# FIG. 1

| 4 ~ | Image référence | | Image courante | |
|---|---|---|---|---|

5 ~ Comparaison des luminances

Comparaison des contours ~ 8

7 ~ 3 classes

5 classes ~ 9

Etiquetage initial comprenant 7 étiquettes ~ 10

Relaxation ~ 11

# FIG.2

FIG.3a

FIG.3b

Proba_double_cont. maximum

↓

c'est un contour
dans la référence

Non ← → Oui

Non contour

Proba_cont_id
>
Proba_double cont.

Non ← → Oui

Contour fond

amplitude cont. source
>
amplitude cont. fond

Non ← → Oui

Contour cache          Contour objet

# FIG.4

Proba_cont_objet maximum

↓

Proba_cont_id
>
Proba_double cont.

Non ← → Oui

Contour objet

c'est un contour
dans la référence

Non ← → Oui

Non contour          Contour fond

# FIG.5

```
┌─────────────────────┐
│  Proba_cont_cache   │
│      maximum        │
└─────────────────────┘
          │
          ▼
┌─────────────────────┐
│  c'est un contour   │
│  dans la référence  │
└─────────────────────┘
     Non        Oui
    ╱              ╲
   ▼                ┌──────────────────┐
Non contour        │  Proba_cont_id   │
                   │        >         │
                   │  Proba_ double   │
                   │      cont.       │
                   └──────────────────┘
                     Non          Oui
                    ╱                ╲
                   ▼                  ▼
            Contour cache       Contour fond
```

# FIG.6

| $P_1$ $P_2$ | $L_1$ | $L_2$ | $L_3$ | $L_4$ | $L_5$ | $L_6$ | $L_7$ |
|---|---|---|---|---|---|---|---|
| $L_1$ | $-3\beta$ | $-\beta$ | $+\beta$ | $+\beta$ | $+3\beta$ | $+\beta$ | $+\beta$ |
| $L_2$ | $-\beta$ | $-3\beta$ | $+\beta$ | $+\beta$ | $+3\beta$ | $+\beta$ | $-\beta$ |
| $L_3$ | $+\beta$ | $+\beta$ | $-3\beta$ | $-\beta$ | $-\beta$ | $+\beta$ | $+\beta$ |
| $L_4$ | $+\beta$ | $+\beta$ | $-\beta$ | $-3\beta$ | $-\beta$ | $+\beta$ | $+\beta$ |
| $L_5$ | $+3\beta$ | $+3\beta$ | $-\beta$ | $-\beta$ | $-3\beta$ | $+3\beta$ | $+3\beta$ |
| $L_6$ | $+\beta$ | $+\beta$ | $+\beta$ | $+\beta$ | $+3\beta$ | $-3\beta$ | $-\beta$ |
| $L_7$ | $+\beta$ | $-\beta$ | $+\beta$ | $+\beta$ | $+3\beta$ | $-\beta$ | $-3\beta$ |

# FIG.8

FIG.7

91

6

Image précédente

Image courante

94

93

Estimation de mouvement
en tout point de l'image

Masques

Sélection des principaux
mouvements pour chaque
masque des objets

95

Attribution des principaux
mouvements à chaque
masque

96

Relaxation

97

# FIG.9

4

6

91

| Image de référence | Image courante | Image précédente |

10

11

| Etiquetage initiale | | Estimation de mouvement |

102

| Relaxation |

2

| Séparation des objets connexes |

# FIG.10

FIG.11

91 Image précédente

6 Image courante

4 Image de référence

1 Détection d'objets

2 Séparation des objets connexes

111 Prédiction temporelle du mouvement

112 Prédiction temporelle des masques

113 Réactualisation de la référence

FIG.12a

FIG.12b

FIG.12c

FIG.13

EP 0 530 088 A1

**Office européen des brevets**

**RAPPORT DE RECHERCHE EUROPEENNE**

Numero de la demande

EP 92 40 2322

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y<br>A | EP-A-0 139 292 (HITACHI)<br><br>* page 6 - page 16; figures * | 1,3-5<br>10-12 | G01S3/786<br>G06F15/70 |
| Y<br>A | EP-A-0 427 537 (GEC-MARCONI)<br><br>* colonne 3 - colonne 5; figures * | 1,3-5<br>2,6-8 | |
| A,D | IEEE TRANSACTIONS ON PATTERN ANALYSIS AND MACHINE<br>vol. PAMI6, no. 6, 1 Novembre 1984, NEW YORK US<br>pages 721 - 741<br>GEMAN ET AL 'STOCHASTIC RELAXATION, GIBBS DISTRIBUTIONS, AND THE BAYSESIAN RESTORATION OF IMAGES'<br>* le document en entier * | 9 | |
| A | EP-A-0 420 657 (TOSHIBA)<br>* le document en entier * | 1-8 | |
| A | ICASSP 88-M<br>vol. II, 11 Avril 1988, NEW YORK US<br>pages 1084 - 1087<br>DONOHOE ET AL 'CHANGE DETECTION FOR TARGET DETECTION AND CLASSIFICATION IN VIDEO SEQUENCES'<br>* le document en entier * | 1-8 | |

| DOMAINES TECHNIQUES RECHERCHES (Int. Cl.5 ) |
|---|
| G01S<br>G06F |

Le présent rapport a été établi pour toutes les revendications

| Lieu de la recherche | Date d'achèvement de la recherche | Examinateur |
|---|---|---|
| LA HAYE | 03 DECEMBRE 1992 | DEVINE J.J. |